# EUROPEAN PATENT APPLICATION

(11) **EP 4 806 746 A1**
(43) Date of publication of application: **16.09.2026**
(21) Application number: 24809725.5
(22) Date of filing: 28.10.2024
(51) Int. Cl.: B60W 30/095, B60W 30/16, B60W 40/09, B60W 50/14

(54) **CONTROL DEVICE AND CONTROL METHOD FOR RIDER ASSIST SYSTEM**

(30) Priority: 09.11.2023 JP 2023191201
(71) Applicant: Robert Bosch GmbH, 70442 Stuttgart (DE)
(72) Inventor: PFAU, Lars, Yokohama-shi, Kanagawa 224-8501 (JP)
(74) Representative: Isarpatent
(86) International application number: PCT/IB2024/060605
(87) International publication number: WO 2025/099531

(57) **Abstract**

[Problem] The present invention provides a controller and a control method that can ensure the assistance performance for a rider and suppress an increase in processing load in a compatible manner.

[Means for Resolution] An execution unit of the controller executes a second rider assistance operation when it is determined that group traveling in which a plurality of saddle-type vehicles (200) including a host vehicle (100) travels in a group while forming a plurality of vehicle lines (VL1 and VL2) is being performed, the second rider assistance operation being different from a first rider assistance operation which is executed when it is determined that the group traveling is not being performed. The execution unit executes the second rider assistance operation based on partial surrounding environment information which is information included in surrounding environment information and is information of a target range (O) being a part of a detection range (R) of a surrounding environment detector (11). The target range (O) is changed by the execution unit (22).

## Description

### Technical Field

The present invention relates to a control device for a rider assistance system for a saddle-type vehicle and a control method for a rider assistance system for a saddle-type vehicle.

### Background Art

In a rider assistance system in a related art, a controller acquires surrounding environment information of a host vehicle and executes a rider assistance operation for assisting a rider of the vehicle (for example, see PTL 1).

### Citation List

### Patent Literature

PTL 1: WO2018/197965

### Summary of Invention

### Technical Problem

In a situation where a plurality of saddle-type vehicles including a host vehicle is traveling in a group, it may be preferable to perform a special rider assistance operation. In group traveling by a plurality of saddle-type vehicles, a plurality of vehicle lines may be formed because a vehicle body size of a saddle-type vehicle is much smaller than that of other vehicles (e.g., a passenger car or a truck). In order to perform a rider assistance operation under such a situation, it may be necessary for a controller to perform a lot of processing on surrounding environment information.

The invention has been made in view of the above-described problem, and an object thereof is to provide a controller that can ensure assistance performance for a rider and suppress an increase in processing load in a compatible manner. In addition, a control method that can ensure the assistance performance for a rider and suppress an increase in processing load in a compatible manner is also provided. Solution to Problem

A controller according to the invention is a controller for a rider assistance system and includes: an acquisition unit that acquires surrounding environment information of a host vehicle based on an output from a surrounding environment detector mounted to the host vehicle; and an execution unit that executes a second rider assistance operation when it is determined that group traveling in which a plurality of saddle-type vehicles including the host vehicle travels in a group while forming a plurality of vehicle lines is being performed, the second rider assistance operation being different from a first rider assistance operation which is performed when it is determined that the group traveling is not performed. The execution unit executes the second rider assistance operation based on partial surrounding environment information which is information included in the surrounding environment information and is information of a target range being a part of a detection range of the surrounding environment detector. The target range is changed by the execution unit.

A control method according to the invention is a control method for a rider assistance system and includes: an acquisition step of acquiring, by an acquisition unit of a controller, surrounding environment information of a host vehicle based on an output from a surrounding environment detector mounted to the host vehicle; and an execution step of executing, by an execution unit of the controller, a second rider assistance operation when it is determined that group traveling in which a plurality of saddle-type vehicles including the host vehicle travels in a group while forming a plurality of vehicle lines is being performed, the second rider assistance operation being different from a first rider assistance operation which is performed when it is determined that the group traveling is not performed. In the execution step, the execution unit executes the second rider assistance operation based on partial surrounding environment information which is information included in the surrounding environment information and is information of a target range being a part of a detection range of the surrounding environment detector. The target range is changed by the execution unit.

### Advantageous Effects of Invention

In the controller and the control method according to the invention, the execution unit executes the second rider assistance operation when it is determined that the group traveling in which the plurality of saddle-type vehicles including the host vehicle travels in a group while forming the plurality of vehicle lines is being performed, the second rider assistance operation being different from the first rider assistance operation which is performed when it is determined that the group traveling is not performed. The execution unit executes the second rider assistance operation based on the partial surrounding environment information which is information included in the surrounding environment information and is information of the target range being a part of the detection range of the surrounding environment detector. The target range is changed by the execution unit. Accordingly, the second rider assistance operation can be executed in such a manner that the reliability and the processing load of the controller are ensured in a compatible manner.

### Brief Description of Drawings

Fig. 1 is a diagram illustrating a state in which a rider assistance system according to an embodiment of the invention is mounted to a saddle-type vehicle.
Fig. 2 is a diagram illustrating a system configuration of the rider assistance system according to the embodiment of the invention.
Fig. 3 is a diagram for explaining a configuration of the rider assistance system according to the embodiment of the invention.
Fig. 4 is a diagram for explaining a configuration of the rider assistance system according to the embodiment of the invention.
Fig. 5 is a diagram for explaining a configuration of the rider assistance system according to the embodiment of the invention.
Fig. 6 is a diagram for explaining a configuration of the rider assistance system according to the embodiment of the invention.
Fig. 7 is a diagram for explaining a configuration of the rider assistance system according to the embodiment of the invention.
Fig. 8 is a diagram for explaining a configuration of the rider assistance system according to the embodiment of the invention.
Fig. 9 is a diagram illustrating an operation flow of a controller of the rider assistance system according to the embodiment of the invention.

### Description of Embodiments

A controller and a control method according to the invention will be described below with reference to the drawings.

Configurations, operations, and the like that will be described below are merely examples, and the controller and the control method according to the invention are not limited to such configurations, operations, and the like.

For example, in the following, a case where the controller and the control method according to the invention are used for a rider assistance system for a motorcycle will be described, but the controller and the control method according to the present invention may be used for a rider assistance system for a saddle-type vehicle other than the motorcycle. The saddle-type vehicle refers to a vehicle on which a rider rides astride to drive the vehicle. The saddle-type vehicle includes, for example, a motorcycle (a two-wheeled motorcycle and a three-wheeled motorcycle) and a bicycle. The motorcycle includes a vehicle using an engine as a power source, a vehicle using an electric motor as a power source, and the like. The motorcycle includes, for example, a motorbike, a scooter, and an electric scooter. The bicycle refers to a vehicle that can be propelled on a road by a pedaling force of a rider applied to pedals. The bicycle includes an ordinary bicycle, a power-assisted bicycle, an electric bicycle, and the like.

In the following, the same or similar descriptions are simplified or omitted as appropriate. For the same or similar parts in each drawing, the same reference signs are assigned, or assignment of reference signs is omitted. In addition, detailed structures are appropriately simplified or omitted in the drawings.

### Embodiments

A rider assistance system according to an embodiment will be described below.

### Configuration of Rider Assistance System

A rider assistance system according to an embodiment will be described.

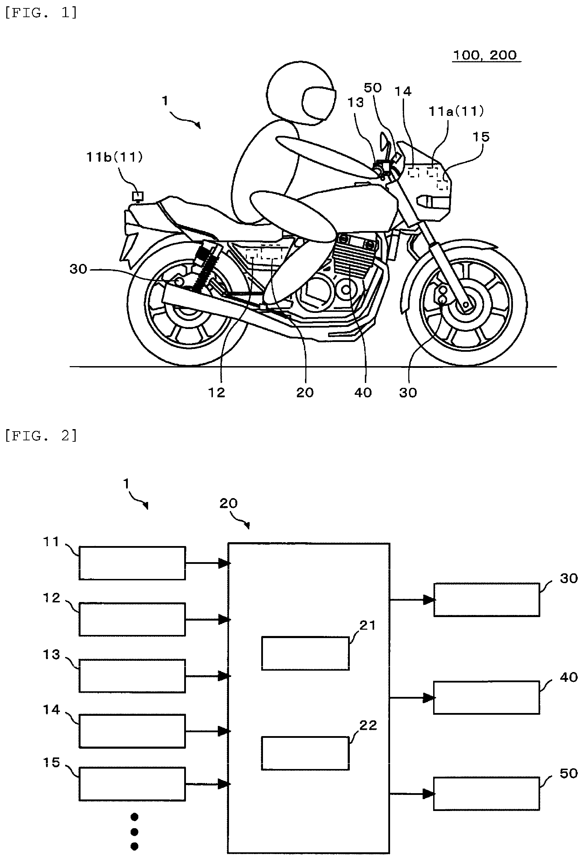

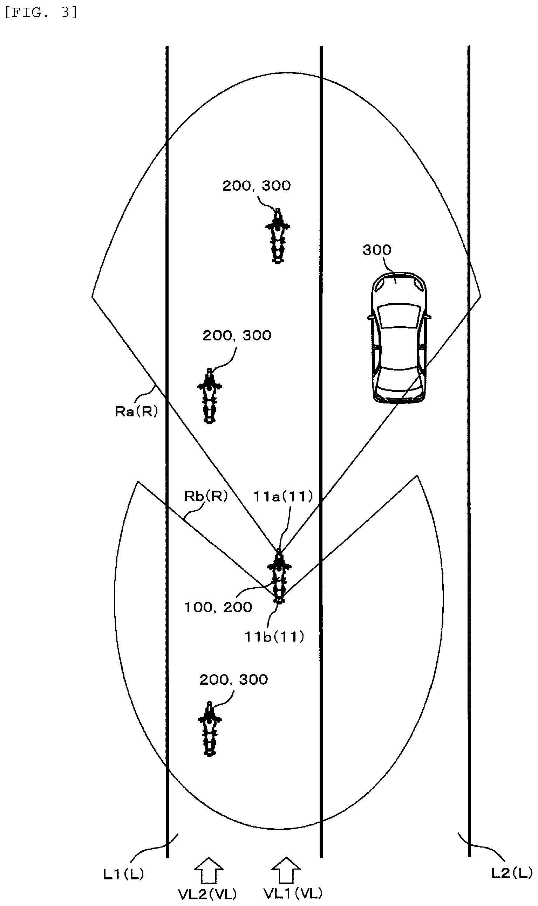

Fig. 1 is a diagram illustrating a state in which a rider assistance system according to an embodiment of the invention is mounted to a saddle-type vehicle. Fig. 2 is a diagram illustrating a system configuration of the rider assistance system according to the embodiment of the invention. Figs. 3 to 8 are diagrams for explaining configurations of the rider assistance system according to the embodiment of the invention.

As illustrated in Figs. 1 and 2, a rider assistance system 1 is mounted to a host vehicle 100 which is a saddle-type vehicle 200 and on which a rider to be assisted by the rider assistance system 1 rides. The rider assistance system 1 includes as appropriate, for example, a surrounding environment detector 11, a vehicle behavior detection apparatus 12, a setting input apparatus 13, a communication apparatus 14, a positioning apparatus 15, a controller (ECU) 20, a braking apparatus 30, a driving apparatus 40, and a notification apparatus 50.

In the rider assistance system 1, the controller 20 uses outputs of the surrounding environment detector 11, the vehicle behavior detection apparatus 12, the setting input apparatus 13, the communication apparatus 14, and/or the positioning apparatus 15 to execute rider assistance operations for assisting a rider of the host vehicle 100. The controller 20 outputs a control command to each apparatus (e.g., the braking apparatus 30, the driving apparatus 40, and the notification apparatus 50) to execute the rider assistance operations. Where appropriate, the controller 20 receives an output of each apparatus (not illustrated) that detects other information (e.g., information about a state of operation of the braking apparatus 30 by the rider and information of a state of operation of the driving apparatus 40 by the rider). Each part of the rider assistance system 1 may be used exclusively for the rider assistance system 1, or may be shared with another system.

The surrounding environment detector 11 includes at least a detection unit 11a disposed at the host vehicle 100 in a state of facing forward. The detection unit 11a detects surrounding environment information in front of the host vehicle 100 and surrounding environment information diagonally in front of the host vehicle 100. In addition, where appropriate, the surrounding environment detector 11 includes a detection unit 11b disposed at the host vehicle 100 in a state of facing backward. The detection unit 11b detects surrounding environment information behind the host vehicle 100 and surrounding environment information diagonally behind and laterally beside the host vehicle 100. The detection unit 11b may detect only surrounding environment information behind and diagonally behind the host vehicle 100, or may detect only surrounding environment information laterally beside the host vehicle 100. Each of the detection units 11a and 11b is, for example, a radar, a Lidar sensor, an ultrasonic sensor, or a camera. The detection unit 11a may include two or more sensors that detect respective regions different from each other. The detection unit 11b may include two or more sensors that detect respective regions different from each other.

The vehicle behavior detection apparatus 12 is, for example, a vehicle speed sensor, or an inertial sensor (IMU). The vehicle speed sensor detects a speed generated at the host vehicle 100. The vehicle speed sensor may detect another physical quantity that can be substantially converted into a vehicle speed generated at the host vehicle 100. The inertial sensor detects accelerations in three axes (a vehicle longitudinal direction, a vehicle width direction, and a vehicle height direction) and angular velocities in three axes (roll, pitch, and yaw) generated at the host vehicle 100. The inertial sensor may detect other physical quantities that can be substantially converted into accelerations in the three axes and angular velocities in the three axes generated at the host vehicle 100. Further, the inertial sensor may detect only some of the accelerations in the three axes and the angular velocities in the three axes.

The setting input apparatus 13 receives inputs of various settings by the rider. For example, the rider can switch between enabling and disabling various rider assistance operations using the setting input apparatus 13. For example, the rider can set various modes or various control parameters (e.g., permissible values) used in various rider assistance operations by using the setting input apparatus 13. The setting input apparatus 13 may receive an operation by the body (e.g., a hand or a foot) of the rider, or may receive a voice emitted from the rider. The setting input apparatus 13 may be provided to the host vehicle 100, or may be provided to equipment (e.g., a helmet or a glove) pertaining to the host vehicle 100.

The communication apparatus 14 communicates directly or indirectly with another communication apparatus provided to another vehicle located around the host vehicle 100, and/or another communication apparatus provided to road equipment (e.g., a traffic light, a traffic sign, a guardrail, a utility pole, or a stop line). A communication apparatus provided to another vehicle directly or indirectly transmits, to the communication apparatus 14, traveling state information of the other vehicle detected at the other vehicle and surrounding environment information of the other vehicle detected at the other vehicle, for example. Another communication apparatus provided to road equipment directly or indirectly transmits, to the communication apparatus 14, state information of the road equipment and surrounding environment information of the road equipment detected at the road equipment, for example. The communication apparatus 14 may include two or more receivers whose communication ranges are regions different from each other.

The positioning apparatus 15 receives positioning signals transmitted from a plurality of communication satellites and determines the position of the host vehicle 100 on a global positioning system. The position of the host vehicle 100 is cross-checked with map information, whereby position information on a map is acquired.

The controller 20 includes at least an acquisition unit 21 and an execution unit 22. All or each part of the controller 20 may be collectively provided in one housing, or may be separately provided in a plurality of housings. In addition, for example, all or each part of the controller 20 may include a microcomputer or a microprocessor unit, or may include an updatable element such as firmware, or may be a program module that is executed in accordance with a command from a CPU or the like. A part of the controller 20 may be incorporated in another apparatus (e.g., the surrounding environment detector 11).

The acquisition unit 21 acquires the surrounding environment information of the host vehicle 100 based on an output of the surrounding environment detector 11 while the host vehicle 100 is traveling. The surrounding environment information includes positional relationship information between the host vehicle 100 and a target (e.g., another vehicle, an obstacle, road equipment, people, or an animal) located around the host vehicle 100. The positional relationship information is, for example, information about a relative position, a relative distance, a relative speed, a relative acceleration, a relative jerk, a passing time difference, or a predicted time to collision. The positional relationship information may be information of other physical quantities that can be substantially converted into them. The surrounding environment information includes feature information of a target (e.g., another vehicle, an obstacle, road equipment, people, or an animal) located around the host vehicle 100. The feature information is, for example, vehicle type information of another vehicle, road traffic sign information, or traffic event information. The feature information may be information of other physical quantities that can be substantially converted into them. The acquisition unit 21 acquires the surrounding environment information of the host vehicle 100 based on an output of the communication apparatus 14 while the host vehicle 100 is traveling.

The execution unit 22 executes a vehicle speed control operation which is an operation of automatically controlling a vehicle speed generated at the host vehicle 100, as a rider assistance operation for assisting the rider in driving the host vehicle 100. In executing the vehicle speed control operation, the execution unit 22 outputs a control command to the braking apparatus 30 and/or the driving apparatus 40. The braking apparatus 30 applies a brake to the host vehicle 100. The driving apparatus 40 drives the host vehicle 100 as a power source of the host vehicle 100. In executing the vehicle speed control operation, the braking apparatus 30 may be controlled so as to generate or increase a deceleration, or may be controlled so as to generate or increase an acceleration. In executing the vehicle speed control operation, the driving apparatus 40 may be controlled so as to generate or increase an acceleration, or may be controlled so as to generate or increase a deceleration. It should be noted that the vehicle speed control operation is canceled when there is an intervention with a predetermined operation by the rider.

The execution unit 22 executes a notification operation which is an operation of making a notification to the rider of the host vehicle 100 instead of or in addition to the vehicle speed control operation, as a rider assistance operation for assisting the rider in driving the host vehicle 100. In executing the notification operation, the execution unit 22 outputs a control command to the notification apparatus 50. The notification apparatus 50 may make a notification of warning or information by display (i.e., a perception using a visual organ as a sensory organ), or may make a notification of warning or information by sound (i.e., a perception using an auditory organ as a sensory organ), or may make a notification of warning or information by vibration (i.e., a perception using a tactile organ as a sensory organ). For example, the notification apparatus 50 is a display, a lamp, a speaker, or a vibrator. The notification apparatus 50 may be provided to the host vehicle 100, or may be provided to equipment (e.g., a helmet or a glove) pertaining to the host vehicle 100. The notification operation may make a notification of warning or information by causing the host vehicle 100 to instantaneously decelerate or accelerate. That is, the notification apparatus 50 may include the braking apparatus 30 or the driving apparatus 40.

The execution unit 22 determines whether group driving is being performed while the host vehicle 100 is traveling. As illustrated in Fig. 3, the group driving refers to a state in which a plurality of saddle-type vehicles 200 including the host vehicle 100 travels while forming at least two vehicle lines VL1 and VL2. That is, the group traveling is traveling in which the plurality of saddle-type vehicles 200 including the host vehicle 100 travels while forming a column. Further, the group traveling is traveling in which the plurality of saddle-type vehicles 200 forms at least two vehicle lines VL1 and VL2 in one lane L1. It should be noted that the number of the saddle-type vehicles 200 constituting the group traveling may be two. The two vehicle lines VL1 and VL2 may be formed such that the plurality of saddle-rider type vehicles 200 including the host vehicle 100 is arranged in a zig-zag manner. Alternatively, the two vehicle lines VL1 and VL2 may be formed such that the plurality of saddle-type vehicles 200 including the host vehicle 100 travels in parallel in pairs. The execution unit 22 executes a first rider assistance operation when it is determined that the group traveling is not being performed, and executes a second rider assistance operation when it is determined that the group traveling is being performed, the second rider assistance operation being different from the first rider assistance operation.

As an example, when it is determined that the group traveling is not being performed, the execution unit 22 causes the host vehicle 100 to execute a first positional relationship adjustment operation as the vehicle speed control operation as the first rider assistance operation. The first positional relationship adjustment operation is an operation of adjusting the positional relationship (in particular, the positional relationship in the traveling direction or the vehicle longitudinal direction of the host vehicle 100) between the host vehicle 100 and a target to a target positional relationship, where the target is an object located in a detection range Ra of the detection unit 11a, that is, another vehicle 300 traveling in front of the host vehicle 100 out of other vehicles 300 traveling around the host vehicle 100, the other vehicle being a target that the host vehicle 100 follows. The target positional relationship may be changed through a setting input by the rider. In the first positional relationship adjustment operation, in addition to or instead of the other vehicle 300 traveling in front of the host vehicle 100, another vehicle 300 traveling behind the host vehicle 100 may be set as the target of positional relationship adjustment.

On the other hand, when it is determined that the group traveling is being performed, the execution unit 22 causes the host vehicle 100 to execute a second positional relationship adjustment operation as the vehicle speed control operation as the second rider assistance operation. The second positional relationship adjustment operation is an operation of adjusting the positional relationship (in particular, the positional relationship in the traveling direction or the vehicle longitudinal direction of the host vehicle 100) between the host vehicle 100 and a target to a target positional relationship, where the target is an object located in the detection range Ra of the detection unit 11a, that is, a saddle-type vehicle 200 traveling diagonally in front of the host vehicle 100 (i.e., the first saddle-type vehicle 200 traveling ahead of the host vehicle 100 in the group traveling in the mode illustrated in Fig. 3) out of the other vehicles 300 traveling around the host vehicle 100, the saddle-type vehicle 200 being a target that the host vehicle 100 follows. The target positional relationship may be changed through a setting input by the rider. The target positional relationship here may be such that the host vehicle 100 is closer to the target as compared to the target positional relationship in the first positional relationship adjustment operation. In the second positional relationship adjustment operation, in addition to or instead of the above-described saddle-type vehicle 200, the saddle-type vehicle 200 traveling in front of the host vehicle 100 (i.e., the second saddle-type vehicle 200 traveling ahead of the host vehicle 100 in the group traveling in the mode illustrated in Fig. 3), and/or a saddle-type vehicle 200 traveling diagonally behind or behind the host vehicle 100 (i.e., the first or second saddle-type vehicle 200 traveling behind the host vehicle 100 in the group traveling in the mode illustrated in Fig. 3) may be set as the target of the positional relationship adjustment. That is, in the second positional relationship adjustment operation, another saddle-type vehicle 200 performing the group traveling together with the host vehicle 100 is set as the target.

The first positional relationship adjustment operation and the second positional relationship adjustment operation may be an adjustment operation of adjusting the positional relationship between the host vehicle 100 and the target by automatically causing the host vehicle 100 to decelerate or accelerate without the operation of the braking apparatus 30 and the driving apparatus 40 by the rider. Examples of the adjustment operation include an adaptive cruise control operation of controlling an inter-vehicle distance or a passing time difference with respect to the target using the target as the subject of speed follow-up, an operation of activating the braking apparatus 30 to control the inter-vehicle distance or the passing time difference with respect to the target to an amount corresponding to the operating amount of the driving apparatus 40 by the rider in a state in which the driving apparatus 40 is being operated by the rider, and an operation of activating the driving apparatus 40 to control the inter-vehicle distance or the passing time difference with respect to the target to an amount corresponding to the operating amount of the braking apparatus 30 by the rider in a state in which the braking apparatus 30 is being operated by the rider. Further, the first positional relationship adjustment operation and the second positional relationship adjustment operation may be an adjustment operation of adjusting the positional relationship between the host vehicle 100 and the target by automatically increasing or decreasing a braking force generated at the host vehicle 100 so as to correct the excessive or insufficient operation of the braking apparatus 30 by the rider. Furthermore, the first positional relationship adjustment operation and the second positional relationship adjustment operation may be an adjustment operation of adjusting the positional relationship between the host vehicle 100 and the target by automatically increasing or decreasing a driving force generated at the host vehicle 100 so as to correct the excessive or insufficient operation of the driving apparatus 40 by the rider.

As another example, when it is determined that the group traveling is not being performed, the execution unit 22 causes the host vehicle 100 to execute a first collision warning operation as the notification operation as the first rider assistance operation. The first collision warning operation is an operation of notifying the rider of the host vehicle 100 that a collision possibility between the host vehicle 100 and a target exceeds a reference, where the target is an object located in the detection range Ra of the detection unit 11a, that is, another vehicle 300 traveling in front of the host vehicle 100 out of the other vehicles 300 traveling around the host vehicle 100. The reference may be changeable through a setting input by the rider. In the first collision warning operation, in addition to or instead of the other vehicle 300 traveling in front of the host vehicle 100, another vehicle 300 traveling behind the host vehicle 100 may be set as the target of collision possibility determination.

On the other hand, when it is determined that the group traveling is being performed, the execution unit 22 causes the host vehicle 100 to execute a second collision warning operation as the notification operation as the second rider assistance operation. The second collision warning operation is an operation of notifying the rider of the host vehicle 100 that a collision possibility between the host vehicle 100 and a target exceeds a reference, where the target is an object located in the detection range Ra of the detection unit 11a, that is, a saddle-type vehicle 200 traveling diagonally in front of the host vehicle 100 out of the other vehicles 300 traveling around the host vehicle 100 (i.e., the first saddle-type vehicle 200 ahead of the host vehicle 100 in the group traveling in the mode illustrated in Fig. 3). The reference may be changeable through a setting input by the rider. The reference here may be higher than the reference in the collision possibility determination in the first collision warning operation. In the second collision warning operation, in addition to or instead of the above-described saddle-type vehicle 200, a saddle-type vehicle 200 traveling in front of the host vehicle 100 (i.e., the second saddle-type vehicle 200 traveling ahead of the host vehicle 100 in the group traveling in the mode illustrated in Fig. 3), and/or a saddle-type vehicle 200 traveling diagonally behind or behind the host vehicle 100 (i.e., the first or second saddle-type vehicle 200 traveling behind the host vehicle 100 in the group traveling in the mode illustrated in Fig. 3) may be set as the target of the collision possibility determination. That is, in the second collision warning operation, another saddle-type vehicle 200 performing the group traveling together with the host vehicle 100 is set as the target.

In the first collision warning operation and the second collision warning operation, a collision possibility is acquired based on positional relationship information between the host vehicle 100 and the target (in particular, a predicted time to collision). The first collision warning operation may be executed when the first positional relationship adjustment operation is executed, or may be executed regardless of whether the first positional relation adjustment operation is being executed. The second collision warning operation may be executed when the second positional relationship adjustment operation is executed, or may be executed regardless of whether the second positional relationship adjustment operation is being executed.

The execution unit 22 can automatically determine whether the plurality of saddle-type vehicles 200 including the host vehicle 100 is performing the group traveling. When, as a result of the determination, it is determined that the group traveling is being performed, switching between the rider assistance operations (e.g., switching from the first positional relationship adjustment operation to the second positional relationship adjustment operation, or switching from the first collision warning operation to the second collision warning operation) may be performed completely automatically, or may be performed after the switching is suggested to the rider and a setting input for approval is performed by the rider. In the following, a case where whether the group traveling is being performed is determined based on the surrounding environment information acquired by the acquisition unit 21 will be described. However, the rider may be capable of setting whether the group traveling is being performed by operating the setting input apparatus 13, and the execution unit 22 may determine whether the group traveling is being performed based on an output of the setting input apparatus 13.

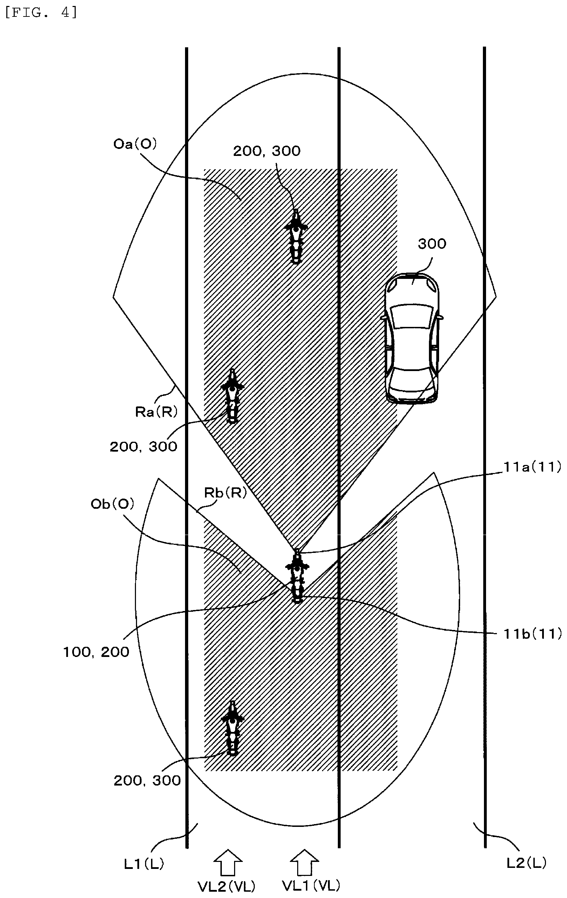

As illustrated in Figs. 4 to 8, the execution unit 22 executes the second rider assistance operation based on partial surrounding environment information which is information included in the surrounding environment information acquired by the acquisition unit 21 and is information of a target range O being a part of the detection range R of the surrounding environment detector 11. The partial surrounding environment information may be acquired through processing of removing information of a region located outside the target range O from the surrounding environment information acquired for the entire detection range R of the surrounding environment detector 11. Alternatively, the target range O may be once set so as to include a region located outside the detection range R of the surrounding environment detector 11, then the partial surrounding environment information may be acquired when the information of the region located outside the detection range R cannot be acquired at the stage of acquiring the surrounding environment information for the detection range R of the surrounding environment detector 11.

For example, the execution unit 22 determines whether the plurality of saddle-type vehicles 200 including the host vehicle 100 is performing the group traveling based on the partial surrounding environment information. Such a determination may be made in a state in which the first rider assistance operation is being performed, or may be made in a state in which the second rider assistance operation is being performed. The execution unit 22 acquires positional relationship information between the host vehicle 100 and another vehicle 300 existing in the target range O based on the partial surrounding environment information, and determines whether the host vehicle 100 and the other vehicle 300 continue to travel in a specific mode (e.g., as illustrated in Fig. 3, a mode in which the two vehicle lines VL1 and VL2 are formed such that the plurality of saddle-type vehicles 200 including the host vehicle 100 is arranged in a zig-zag manner, or a mode in which the two vehicle lines VL1 and VL2 are formed such that the plurality of saddle-type vehicles 200 including the host vehicle 100 travels in parallel in pairs) in excess of a reference time or a reference travel distance. When the determination result is positive, it is determined that the plurality of saddle-type vehicles 200 including the host vehicle 100 is performing the group traveling.

For example, when it is determined that the plurality of saddle-type vehicles 200 including the host vehicle 100 is performing the group traveling, the execution unit 22 sets a control parameter for the second rider assistance operation based on the partial surrounding environment information. Such a setting may be made in a state in which the first rider assistance operation is being performed, or may be made in a state in which the second rider assistance operation is being performed. The execution unit 22 acquires positional relationship information between the host vehicle 100 and a saddle-type vehicle 200 existing in the target range O and performing the group traveling together with the host vehicle 100 based on the partial surrounding environment information, determines whether the host vehicle 100 belongs to the left or right vehicle line VL in the group traveling based on the positional relationship information, and sets a target for, for example, the second positional relationship adjustment operation or the second collision warning operation based on the determination result. The execution unit 22 acquires positional relationship information between the host vehicle 100 and a saddle-type vehicle 200 existing in the target range O and performing the group traveling together with the host vehicle 100 based on the partial surrounding environment information, determines a role (e.g., the first vehicle, the last vehicle, or an intermediate vehicle) of the host vehicle 100 in the group traveling based on the positional relationship information, and sets a target for, for example, the second positional relationship adjustment operation or the second collision warning operation based on the determination result. The execution unit 22 acquires positional relationship information between the host vehicle 100 and a saddle-type vehicle 200 existing in the target range O and performing the group traveling together with the host vehicle 100 based on the partial surrounding environment information, determines a mode of a column in the group traveling (e.g., as illustrated in Fig. 3, a mode in which the two vehicle lines VL1 and VL2 are formed such that the plurality of saddle-type vehicles 200 including the host vehicle 100 is arranged in a zig-zag manner, or a mode in which the two vehicle lines VL1 and VL2 are formed such that the plurality of saddle-type vehicles 200 including the host vehicle 100 travels in parallel in pairs), and sets, for example, the target positional relationship in the second positional relationship adjustment operation, or the reference for the collision possibility determination in the second collision warning operation.

Here, the target range O is changed by the execution unit 22. The execution unit 22 changes the target range O in accordance with a situation. In changing the target range O, both of or only one of a target range Oa for the detection unit 11a and a target range Ob for the detection unit 11b may be changed.

As an example, as illustrated in Fig. 4, the execution unit 22 sets the target range O based on the traveling state information of the host vehicle 100, that is, vehicle speed information which is information of the vehicle speed of the host vehicle 100. The vehicle speed information is acquired based on an output of the vehicle behavior detection apparatus 12. The vehicle speed information may be information of another physical quantity with which the vehicle speed of the host vehicle 100 can be estimated. For example, in the case where the target positional relationship used in the first positional relationship adjustment operation or the second positional relationship adjustment operation is changed in accordance with the vehicle speed of the host vehicle 100, the vehicle speed information may be information of the target positional relationship. When the vehicle speed information is information indicating that a low vehicle speed is generated at the host vehicle 100, the execution unit 22 may decrease the width of the target range O (the length of the shaded area in the horizontal direction in Fig. 4) as compared with the case where the vehicle speed information is information indicating that a high vehicle speed is generated at the host vehicle 100. When the vehicle speed information is information indicating that a low vehicle speed is generated at the host vehicle 100, the execution unit 22 may decrease the length of the target range O (the length of the shaded area in the vertical direction in Fig. 4) as compared with the case where the vehicle speed information is information indicating that a high vehicle speed is generated at the host vehicle 100. The execution unit 22 may decrease the area of the target range O by changing the shape of the leading end of the target range O (the shape of an end portion on the far side from the host vehicle 100 of the shaded area in the vertical direction in Fig. 4) to a linear shape when the vehicle speed information is information indicating that a low vehicle speed is generated at the host vehicle 100, and may increase the area of the target range O by changing the shape of the leading end of the target range O to a curved shape when the vehicle speed information is information indicating that a high vehicle speed is generated at the host vehicle 100.

As an example, as illustrated in Fig. 4, the execution unit 22 changes the target range O based on the traveling state information of the host vehicle 100, that is, traveling attitude information which is information of the traveling attitude of the host vehicle 100. The traveling attitude information is acquired based on an output of the vehicle behavior detection apparatus 12. The travelling vehicle attitude information may be information of another physical quantity with which the traveling attitude of the host vehicle 100 can be estimated. When the traveling attitude information is information indicating that a high acceleration is generated at the host vehicle 100 in the vehicle longitudinal direction, the execution unit 22 may increase the length of the target range O (the length of the shaded area in the vertical direction in Fig. 4) as compared with the case where the traveling attitude information is information indicating that a low acceleration is generated at the host vehicle 100. When the traveling attitude information is information indicating that a high tilt degree is generated at the host vehicle 100, the execution unit 22 may increase or decrease the width of the target range O (the length of the shaded area in the horizontal direction in Fig. 4) as compared with the case where the traveling attitude information is information indicating that a low tilt degree is generated at the host vehicle 100. The execution unit 22 may change the target range O into a bilaterally symmetrical shape when the traveling attitude information is information indicating that a low tilt degree is generated at the host vehicle 100, and changes the target range O into a shape curved along the traveling direction of the host vehicle 100 when the traveling attitude information is information indicating that a high tilt degree is generated at the host vehicle 100. It should be noted that the tilt degree can be acquired based on an output of the vehicle behavior detection apparatus 12 such as a roll angular velocity, a yaw angular velocity, or an acceleration in the vehicle width direction. The tilt degree may be estimated based on road information (particularly, information of a curvature of a road) acquired based on an output of the communication apparatus 14 or the positioning apparatus 15 and the vehicle speed information of the host vehicle 100.

As an example, as illustrated in Fig. 4, in the case where the execution unit 22 is configured to execute the first positional relationship adjustment operation and the second positional relationship adjustment operation as the rider assistance operations, the execution unit 22 changes the target range O based on the traveling state information of the host vehicle 100, that is, setting input information which is information of a setting input by the rider in the positional relationship adjustment operation (the first positional relationship adjustment operation or the second positional relationship adjustment operation). The setting input information is acquired based on an output of the setting input apparatus 13. In the case where the target positional relationship for the positional relationship adjustment operation (the first positional relationship adjustment operation or the second positional relationship adjustment operation) is set by the rider such that the inter-vehicle distance or the passing time difference of the host vehicle 100 with respect to another vehicle 300, which is a target that the host vehicle 100 follows, is long, the execution unit 22 may increase the length of the target range O (the length of the shaded area in the vertical direction in Fig. 4) as compared to the case where the target positional relationship is set such that the inter-vehicle distance or the passing time difference of the host vehicle 100 with respect to the other vehicle 300, which is the target that the host vehicle 100 follows, is short. In the case where the target positional relationship for the positional relationship adjustment operation (the first positional relationship adjustment operation or the second positional relationship adjustment operation) is set by the rider such that the inter-vehicle distance or the passing time difference of the host vehicle 100 with respect to the other vehicle 300, which is the target that the host vehicle 100 follows, is long, the execution unit 22 may decrease or increase the width of the target range O (the length of the shaded area in the horizontal direction in Fig. 4) as compared to the case where the target positional relationship is set such that the inter-vehicle distance or the passing time difference of the host vehicle 100 with respect to the other vehicle 300, which is the target that the host vehicle 100 follows, is short. The target position relationship acquired at the latest time point may be referred to.

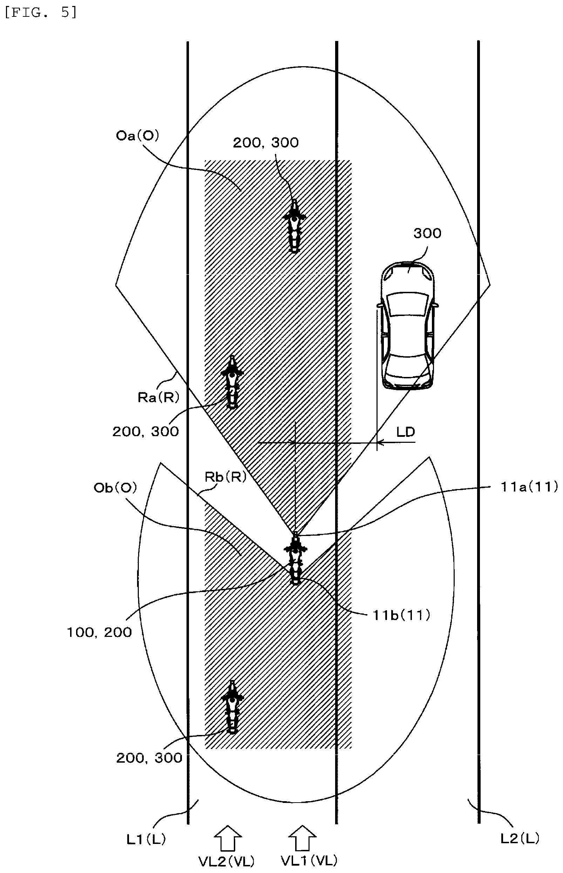

As an example, as illustrated in Fig. 5, when it is known whether the host vehicle 100 belongs to the left or right vehicle line VL in the group traveling, the execution unit 22 changes the target range O based on the traveling state information of the host vehicle 100, that is, vehicle line information which is information of the vehicle line VL1 to which the host vehicle 100 belongs. The vehicle line information may be acquired based on setting information of a control parameter when the second rider assistance operation is executed, or may be acquired based on an output of the setting input apparatus 13 when the rider can set whether the host vehicle 100 belongs to the left or right vehicle line VL by operating the setting input apparatus 13. The vehicle line information may be information of another physical quantity with which the vehicle line VL1 to which the host vehicle 100 belongs can be estimated. The execution unit 22 may decrease the width of the target range O (the length of the shaded area in the horizontal direction in Fig. 5) in a region on the right side of the host vehicle 100 and/or increases the width in a region on the left side of the host vehicle 100 when the vehicle line information is information indicating that the host vehicle 100 belongs to the vehicle line VL1 on the right side. The execution unit 22 may decrease the width of the target range O (the length of the shaded area in the horizontal direction in Fig. 5) in the region on the left side of the host vehicle 100 and/or increases the width in the region on the right side of the host vehicle 100 when the vehicle line information is information indicating that the host vehicle 100 belongs to the vehicle line VL2 on the left side. The execution unit 22 may bias the width center and/or the shape of the target range O toward the left side when the vehicle line information is information indicating that the host vehicle 100 belongs to the vehicle line VL1 on the right side, and biases the width center and/or the shape of the target range O toward the right side when the vehicle line information is information indicating that the host vehicle 100 belongs to the vehicle line VL2 on the left side.

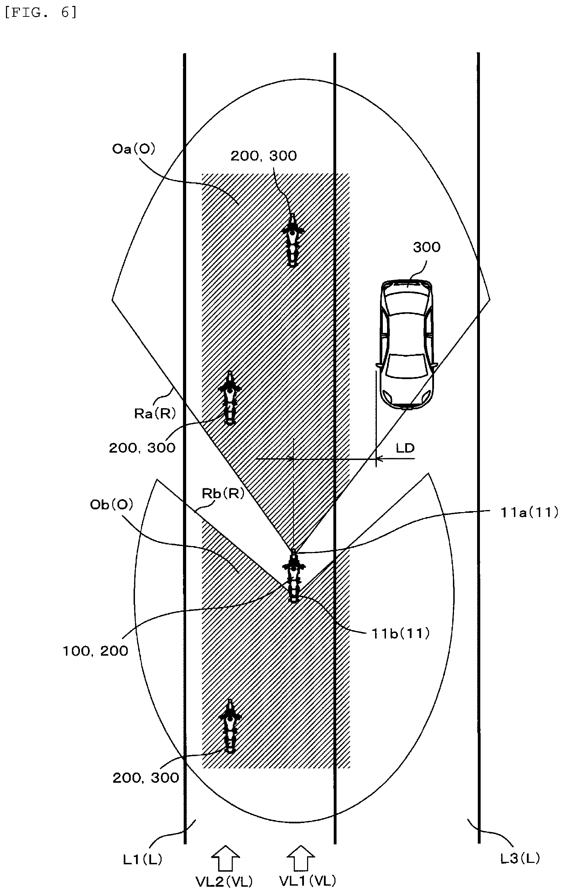

As an example, as illustrated in Figs. 5 and 6, the execution unit 22 changes the target range O based on positional relationship information between the host vehicle 100 and another vehicle 300 passing on a side of the host vehicle 100. When relative speed information, which is information of a relative speed between the host vehicle 100 and the other vehicle 300, is information indicating that the other vehicle 300 is traveling at a higher relative speed than a reference speed with respect to the host vehicle 100, the execution unit 22 acquires relative distance information which is information of a relative distance LD between the host vehicle 100 and the other vehicle 300 in the vehicle width direction of the host vehicle 100. The other vehicle 300 may be another vehicle 300 traveling on a lane L2 for traveling in the same direction as the host vehicle 100 as illustrated in Fig. 5, or may be another vehicle 300 traveling on a lane L3 for traveling in a direction opposite to the host vehicle 100 as illustrated in Fig. 6. The relative speed information and the relative distance information are acquired based on an output of the surrounding environment detector 11 and/or the communication apparatus 14. The relative speed information may be information of another physical quantity which can be substantially converted into a relative speed between the host vehicle 100 and the other vehicle 300. The relative speed information may be information of a relative speed in the vehicle longitudinal direction of the host vehicle 100, or may be information of a relative speed in a direction from the host vehicle 100 to the other vehicle 300. The relative distance LD may be a distance at a time point, or may be an average of distances at a plurality of time points, or may be an average of distances acquired for a plurality of other vehicles 300 passing on the same side of the host vehicle 100 in the vehicle width direction. The relative distance LD may be a distance between any portion of the host vehicle 100 and any portion of the other vehicle 300 in the vehicle width direction of the host vehicle 100. For example, the relative distance LD may be a distance between the center portion of the host vehicle 100 and a portion of the other vehicle 300 closest to the host vehicle 100 or the center portion of the other vehicle 300 in the vehicle width direction of the host vehicle 100, or may be a distance between a portion of the host vehicle 100 closest to the other vehicle 300 and a portion of the other vehicle 300 closest to the host vehicle 100 or the center portion of the other vehicle 300 in the vehicle width direction of the host vehicle 100. The relative distance information may be information of another physical quantity which can be substantially converted into the relative distance LD between the host vehicle 100 and the other vehicle 300 in the vehicle width direction of the host vehicle 100. For example, the relative distance information may be information of a relative distance between the host vehicle 100 and the other vehicle 300 in another direction not perpendicular to the vehicle width direction of the host vehicle 100. The execution unit 22 may determine whether the relative speed information and/or the relative distance information can be acquired in accordance with the traveling state information of the host vehicle 100. For example, the execution unit 22 prohibits the acquisition of the relative speed information and/or the relative distance information when a tilt angle exceeding a reference is generated at the host vehicle 100. The execution unit 22 may determine whether the relative speed information and/or the relative distance information can be acquired in accordance with positional relationship information between the host vehicle 100 and another vehicle 300 passing on a side of the host vehicle 100. For example, the execution unit 22 prohibits the acquisition of the relative speed information and/or the relative distance information when the relative speed and/or the relative acceleration of the other vehicle 300 with respect to the host vehicle 100 in the vehicle width direction of the host vehicle 100 exceeds a reference. For example, the execution unit 22 prohibits the acquisition of the relative speed information and/or the relative distance information when the relative acceleration of the other vehicle 300 with respect to the host vehicle 100 in the vehicle longitudinal direction of the host vehicle 100 exceeds a reference. When the acquired relative distance information is information indicating that the relative distance LD between the host vehicle 100 and the other vehicle 300 is smaller than a reference, the execution unit 22 may decrease the width of the target range O (the length of the shaded area in the horizontal direction in Figs. 5 and 6) in a region on a side of the host vehicle 100 closer to the other vehicle 300, and/or increases the width in a region on a side of the host vehicle 100 farther from the other vehicle 300. When the acquired relative distance information is information indicating that the relative distance LD between the host vehicle 100 and the other vehicle 300 is smaller than the reference, the execution unit 22 may bias the width center and/or the shape of the target range O so as to depart from the other vehicle 300. When the acquired relative distance information is information indicating that the relative distance LD between the host vehicle 100 and the other vehicle 300 is larger than the reference, the execution unit 22 may increase the width of the target range O (the length of the shaded area in the horizontal direction in Figs. 5 and 6) in a region on a side of the host vehicle 100 farther from the other vehicle 300, and/or decreases the width in a region on a side of the host vehicle 100 closer to the other vehicle 300. When the acquired relative distance information is information indicating that the relative distance LD between the host vehicle 100 and the other vehicle 300 is larger than the reference, the execution unit 22 may bias the width center and/or the shape of the target range O so as to approach the other vehicle 300. It should be noted that when it is known that another vehicle 300 passing on a side of the host vehicle 100 is traveling on the lane L3 in a direction opposite to the host vehicle 100 based on road information (in particular, lane count information which is information of the number of lanes L for driving in the same direction as the host vehicle 100), the execution unit 22 may omit the determination using the relative speed information. The road information may be acquired based on an output of, for example, the surrounding environment detector 11 capable of detecting a boundary between the lanes L, the communication apparatus 14, or the positioning apparatus 15, or may be acquired based on an output of the setting input apparatus 13. When the relative speed information is information indicating that the other vehicle 300 is traveling at a relative speed higher than a reference with respect to the host vehicle 100, the execution unit 22 may change the shape of the target range O so as to exclude a region in which the other vehicle 300 is located from the target range O without performing the determination using the relative distance information.

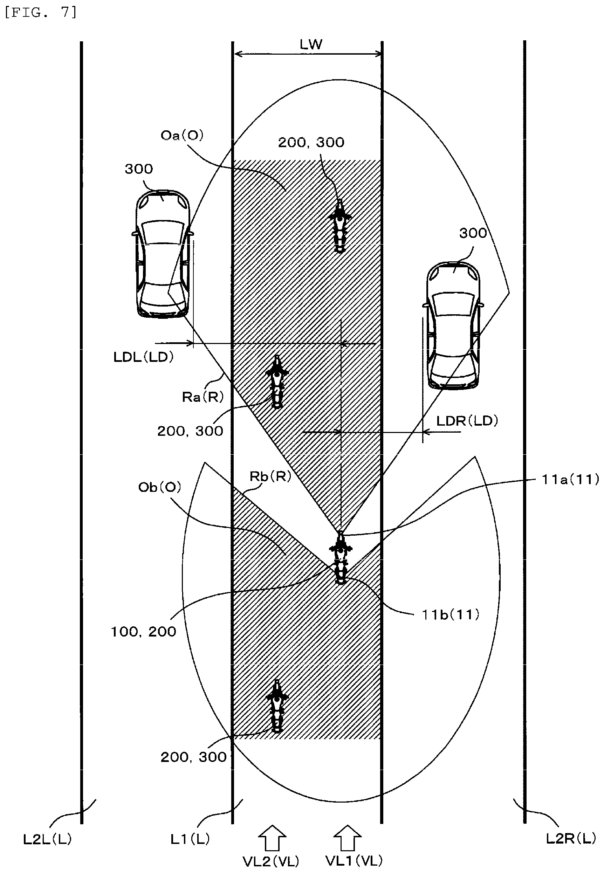

As an example, as illustrated in Fig. 7, the execution unit 22 changes the target range O based on the road information, that is, lane information which is information of a width LW of the lane L1 on which the host vehicle 100 travels. When positional relationship information between the host vehicle 100 and the other vehicles 300 passing on the sides of the host vehicle 100 is information indicating that another vehicle 300 is traveling on the right side of the host vehicle 100 at a higher relative speed than a reference with respect to the host vehicle 100 and information indicating that another vehicle 300 is traveling on the left side of the host vehicle 100 at a higher relative speed than the reference with respect to the host vehicle 100, the execution unit 22 acquires relative distance information which is information of a relative distance LDR between the host vehicle 100 and the other vehicle 300 passing on the right side of the host vehicle 100 in the vehicle width direction of the host vehicle 100 and relative distance information which is information of a relative distance LDL between the host vehicle 100 and the other vehicle 300 passing on the left side of the host vehicle 100 in the vehicle width direction of the host vehicle 100. The other vehicle 300 may be another vehicle 300 traveling on the lane L2 for traveling in the same direction as the host vehicle 100 or may be another vehicle 300 traveling on the lane L3 for traveling in a direction opposite to the host vehicle 100. The relative speed information and the relative distance information are acquired based on an output of the surrounding environment detector 11 and/or the communication apparatus 14. The relative speed information may be information of another physical quantity which can be substantially converted into a relative speed between the host vehicle 100 and the other vehicle 300. The relative speed information may be information of a relative speed in the vehicle longitudinal direction of the host vehicle 100, or may be information of a relative speed in a direction from the host vehicle 100 to the other vehicle 300. Each of the relative distances LDR and LDL may be a distance at a time point, or may be an average of distances at a plurality of time points, or may be an average of distances acquired for a plurality of other vehicles 300 passing on the same side of the host vehicle 100 in the vehicle width direction. Each of the relative distances LDR and LDL may be a distance between any portion of the host vehicle 100 and any portion of the other vehicle 300 in the vehicle width direction of the host vehicle 100. For example, each of the relative distances LDR and LDL may be a distance between the center portion of the host vehicle 100 and a portion of the other vehicle 300 closest to the host vehicle 100 or the center portion of the other vehicle 300 in the vehicle width direction of the host vehicle 100, or may be a distance between a portion of the host vehicle 100 closest to the other vehicle 300 and a portion of the other vehicle 300 closest to the host vehicle 100 or the center portion of the other vehicle 300 in the vehicle width direction of the host vehicle 100. The relative distance information may be information of another physical quantity which can be substantially converted into the relative distance LDR or LDL between the host vehicle 100 and the other vehicle 300 in the vehicle width direction of the host vehicle 100. For example, the relative distance information may be information of a relative distance between the host vehicle 100 and the other vehicle 300 in another direction not perpendicular to the vehicle width direction of the host vehicle 100. The execution unit 22 may determine whether the relative speed information and/or the relative distance information can be acquired in accordance with the traveling state information of the host vehicle 100. For example, the execution unit 22 prohibits the acquisition of the relative speed information and/or the relative distance information when a tilt angle exceeding a reference is generated at the host vehicle 100. The execution unit 22 may determine whether the relative speed information and/or the relative distance information can be acquired in accordance with positional relationship information between the host vehicle 100 and another vehicle 300 passing on a side of the host vehicle 100. For example, the execution unit 22 prohibits the acquisition of the relative speed information and/or the relative distance information when the relative speed and/or the relative acceleration of the other vehicle 300 with respect to the host vehicle 100 in the vehicle width direction of the host vehicle 100 exceeds a reference. For example, the execution unit 22 prohibits the acquisition of the relative speed information and/or the relative distance information when the relative acceleration of the other vehicle 300 with respect to the host vehicle 100 in the vehicle longitudinal direction of the host vehicle 100 exceeds a reference. The execution unit 22 acquires the lane width information based on the relative distance information which is information of the relative distance LDR between the host vehicle 100 and the other vehicle 300 passing on the right side of the host vehicle 100 in the vehicle width direction of the host vehicle 100 and the relative distance information which is information of the relative distance LDL between the host vehicle 100 and the other vehicle 300 passing on the left side of the host vehicle 100 in the vehicle width direction of the host vehicle 100. That is, on the assumption that the other vehicle 300 passing on the right side of the host vehicle 100 and the other vehicle 300 passing on the left side of the host vehicle 100 are traveling on the centers of lanes L2R and L2L, respectively, the execution unit 22 can acquire half of the distance between the center of the other vehicle 300 passing on the right side of the host vehicle 100 and the center of the other vehicle 300 passing on the left side of the host vehicle 100 as information about the width LW of the lane L1. Then, the execution unit 22 makes the width of the target range O (the length of the shaded area in the horizontal direction in Fig. 7) to coincide with the width LW of the lane L1. When the relative distance LDR is smaller than the relative distance LDL, the execution unit 22 may bias the width center of the target range O to the left side. When the relative distance LDR is larger than the relative distance LDL, the execution unit 22 may bias the width center of the target range O to the right side. The execution unit 22 may determine a biasing amount in accordance with the difference between the relative distance LDR and the relative distance LDL. For example, in the case where the relative distance LDR and the relative distance LDL are defined as illustrated in Fig. 7, the biasing amount is determined as half of the difference between the relative distance LDR and the relative distance LDL. It should be noted that in an expressway, for example, the width of the lane L may be restricted to a prescribed value. For this reason, the execution unit 22 may acquire lane width information, which is information about the width LW of the lane L1 on which the host vehicle 100 travels, by selecting one of a plurality of pieces of lane width information stored in advance based on the relative distance information. In that case, the plurality of pieces of lane width information being candidates for such selection may be changed in accordance with information about an area (e.g., country or municipality) in which the host vehicle 100 is used and/or a road type (e.g., expressway or limited highway). The lane width information may be acquired based on an output of, for example, the surrounding environment detector 11 capable of detecting a boundary between the lanes L, the communication apparatus 14, or the positioning apparatus 15, or may be acquired based on an output of the setting input apparatus 13. In that case, the execution unit 22 may determine a biasing amount by which the width center of the target range O is biased based on the output. The execution unit 22 may bias the width center of the target range O based on vehicle line information which is information of the vehicle line VL1 to which the host vehicle 100 belongs, in addition to or instead of the relative distance information.

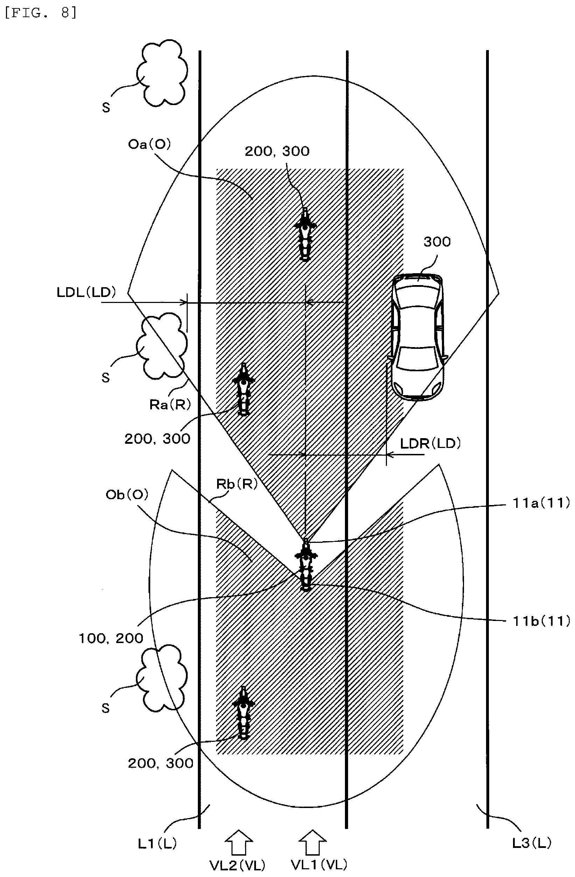

As an example, as illustrated in Fig. 8, the execution unit 22 changes the target range O based on the road information, that is, lane information which is information of the number of the lanes L for traveling in the same direction as the host vehicle 100 and/or the usage of the lane L1 on which the host vehicle 100 travels. When relative position information between the host vehicle 100 and another vehicle 300 passing on a side of the host vehicle 100 as the positional relationship information is information indicating that the other vehicle 300 is moving toward the rear of the host vehicle 100, the execution unit 22 acquires relative distance information which is information of a relative distance LDR between the host vehicle 100 and the other vehicle 300 moving toward the rear on the right side of the host vehicle 100 in the vehicle width direction of the host vehicle 100 and relative distance information which is information of a relative distance LDL between the host vehicle 100 and a stationary object S (e.g., a roadside tree, a guardrail, a noise barrier, a utility pole or a curbstone) located on the left side of the host vehicle 100 in the vehicle width direction of the host vehicle 100. The relative distance information is acquired based on an output of the surrounding environment detector 11 and/or the communication apparatus 14. Each of the relative distances LDR and LDL may be a distance at a time point, or may be an average of distances at a plurality of time points, or may be an average of distances acquired for a plurality of other vehicles 300 passing on the same side of the host vehicle 100 or a plurality of stationary objects S in the vehicle width direction. Each of the relative distances LDR and LDL may be a distance between any portion of the host vehicle 100 and any portion of the other vehicle 300 or the stationary object S in the vehicle width direction of the host vehicle 100. For example, each of the relative distances LDR and LDL may be a distance between the center portion of the host vehicle 100 and a portion of the other vehicle 300 or the stationary object S closest to the host vehicle 100 or the center portion of the other vehicle 300 or the stationary object S in the vehicle width direction of the host vehicle 100, or may be a distance between a portion of the host vehicle 100 closest to the other vehicle 300 or the stationary object S and a portion of the other vehicle 300 or the stationary object S closest to the host vehicle 100 or the center portion of the other vehicle 300 or the stationary object S in the vehicle width direction of the host vehicle 100. The relative distance information may be information of another physical quantity which can be substantially converted into the relative distance LDR or LDL between the host vehicle 100 and the other vehicle 300 or the stationary object S in the vehicle width direction of the host vehicle 100. For example, the relative distance information may be information of a relative distance between the host vehicle 100 and the other vehicle 300 or the stationary object S in another direction not perpendicular to the vehicle width direction of the host vehicle 100. The execution unit 22 may determine whether the relative distance information can be acquired in accordance with the traveling state information of the host vehicle 100. For example, the execution unit 22 prohibits the acquisition of the relative distance information when a tilt angle exceeding a reference is generated at the host vehicle 100. The execution unit 22 may determine whether the relative distance information can be acquired in accordance with positional relationship information between the host vehicle 100 and the other vehicle 300 passing on a side of the host vehicle 100 and/or the stationary object S. For example, the execution unit 22 prohibits the acquisition of the relative speed information and/or the relative distance information when the relative speed and/or the relative acceleration of the other vehicle 300 and/or the stationary object S with respect to the host vehicle 100 in the vehicle width direction of the host vehicle 100 exceeds a reference. For example, the execution unit 22 prohibits the acquisition of the relative distance information when the relative acceleration of the other vehicle 300 and/or the stationary object S with respect to the host vehicle 100 in the vehicle longitudinal direction of the host vehicle 100 exceeds a reference. The execution unit 22 acquires information of the number of the lanes L for traveling in the same direction as the host vehicle 100 as the lane information based on relative distance information which is information of the relative distance LDR between the host vehicle 100 and the other vehicle 300 moving toward the rear on the right side of the host vehicle 100 in the vehicle width direction of the host vehicle 100 and relative distance information which is information of the relative distance LDL between the host vehicle 100 and the stationary object S located on the left side of the host vehicle 100 in the vehicle width direction of the host vehicle 100. That is, on the assumption that the other vehicle 300 moving toward the rear on the right side of the host vehicle 100 is traveling on the center of the lane L2R, the execution unit 22 subtracts an interval between the other vehicle 300 and a boundary of the lane L2R in a standard state and widths of road shoulders in a standard state from a distance between a portion closest to the host vehicle 100 of the other vehicle 300 moving toward the rear on the right side of the host vehicle and a portion closest to the host vehicle 100 of the stationary object S located on the left side of the host vehicle 100, the distance being acquired based on the relative distance information. Then, the execution unit 22 divides the distance after the subtraction by the width LW of the lane L in a standard state, whereby the number of the lanes L for traveling in the same direction as the host vehicle 100 can be acquired. The interval, the widths of road shoulder, and/or the width LW of the lane L may be changed in accordance with information of an area (e.g., country or municipality) in which the host vehicle 100 is used and/or a road type (e.g., expressway or limited highway). When the lane information is information indicating that there is one lane L for traveling in the same direction as the host vehicle 100, the execution unit 22 increases the width of the target range O (the length of the shaded area in the horizontal direction in Fig. 8) as compared with the case where the lane information is information indicating that there is a plurality of lanes L for traveling in the same direction as the host vehicle 100. It should be noted that the extent to which the width is increased and/or whether to increase or decrease the width may be settable by operation of the setting input apparatus 13 by the rider. When the lane information is information indicating that there is a plurality of lanes L for traveling in the same direction as the host vehicle 100, the execution unit 22 acquires information of the usage of the lane L1 on which the host vehicle 100 travels as the lane information. When the relative distance information is information indicating that the relative distance LDR between the host vehicle 100 and the other vehicle 300 moving toward the rear on the right side of the host vehicle 100 in the vehicle width direction of the host vehicle 100 is a distance smaller than a reference, the execution unit 22 acquires lane information indicating that the lane L1 is for passing, and increases the width of the target range O (the length of the shaded area in the horizontal direction in Fig. 8) as compared with the case where the lane information is information indicating that the lane L1 is not for passing. When the lane information is information indicating that there is one lane L for traveling in the same direction as the host vehicle 100, and/or when the lane information is information indicating that there is a plurality of lanes L for traveling in the same direction as the host vehicle 100, the execution unit 22 may biases the width center of the target range O based on vehicle line information which is information of the vehicle line VL1 to which the host vehicle 100 belongs. The lane information which is information of the number of lanes L for traveling in the same direction as the host vehicle 100 and/or the usage of the lane L1 on which the host vehicle 100 travels may be acquired based on an output of, for example, the surrounding environment detector 11 capable of detecting a boundary between the lanes L, the communication apparatus 14, or the positioning apparatus 15, or may be acquired based on an output of the setting input apparatus 13.

### Operations of Rider Assistance System

The operations of the rider assistance system according to the embodiment will be described.

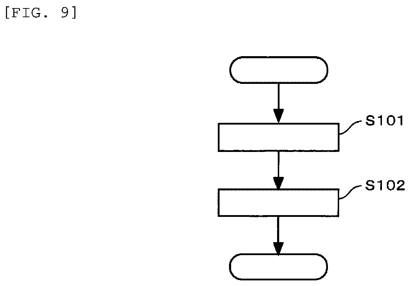

Fig. 9 is a diagram illustrating an operation flow of the controller of the rider assistance system according to the embodiment of the invention.

The controller 20 executes the operation flow illustrated in Fig. 9 while the host vehicle 100 is traveling.

### Acquisition Step

In step S101, the acquisition unit 21 acquires surrounding environment information of the host vehicle 100 based on an output of the surrounding environment detector 11 mounted to the host vehicle 100. Where appropriate, the acquisition unit 21 acquires various types of information.

### Execution Step

In step S102, the execution unit 22 executes the second rider assistance operation when it is determined that the group traveling in which the plurality of saddle-type vehicles 200 including the host vehicle 100 travels in a group while forming the plurality of vehicle lines VL1 and VL2 is being performed, the second rider assistance operation being different from the first rider assistance operation which is performed when it is determined that the group traveling is not being performed. The execution unit 22 executes the second rider assistance operation based on the partial surrounding environment information which is information included in the surrounding environment information and is information of the target range O being a part of the detection range R of the surrounding environment detector 11. The target range O is changed by the execution unit 22.

### Effects of Rider Assistance System

The effects of the rider assistance system according to the embodiment will be described.

The execution unit 22 executes the second rider assistance operation when it is determined that the group traveling in which the plurality of saddle-type vehicles 200 including the host vehicle 100 travels in a group while forming the plurality of vehicle lines VL1 and VL2 is being performed, the second rider assistance operation being different from the first rider assistance operation which is performed when it is determined that the group traveling is not being performed. The execution unit 22 executes the second rider assistance operation based on the partial surrounding environment information which is information included in the surrounding environment information and is information of the target range O being a part of the detection range R of the surrounding environment detector 11. The target range O is changed by the execution unit 22. Accordingly, the second rider assistance operation can be executed in such a manner that the reliability and the processing load of the controller 20 are ensured in a compatible manner.

The embodiments have been described above, but only parts of the embodiments may be implemented, or parts of the embodiments may be combined with each other, or parts of the embodiments may be changed to different aspects. That is, the invention is not limited to the descriptions of the embodiments.

For example, the target range O may be changed based on various combinations selected from some or all of various types of information as the traveling state information of the host vehicle 100, some or all of various types of information as the positional relationship information between the host vehicle 100 and another vehicle 300 passing on a side of the host vehicle 100, and some or all of various types of information as the road information.

For example, the embodiments describe the case where the road on which the host vehicle 100 travels is for left-side traffic, but the road on which the host vehicle 100 travels may be for right-side traffic.

### Reference Signs List

1: Rider assistance system
11: Surrounding environment detector
11a, 11b: Detection unit
12: Vehicle behavior detection apparatus
13: Setting input apparatus
14: Communication apparatus
15: Positioning apparatus
20: Controller
21: Acquisition unit
22: Execution unit
30: Braking apparatus
40: Driving apparatus
50: Notification apparatus
100: Host vehicle
200: Saddle-type vehicle
300: Another vehicle
L, L1, L2, L2R, L2L, L3: Lane
VL, VL1, VL2: Vehicle line
R, Ra, Rb: Detection range
O, Oa, Ob: Target range
S: Stationary object

## Claims

1. A controller (20) for a rider assistance system (1), the controller comprising:
an acquisition unit (21) configured to acquire surrounding environment information of a host vehicle (100) based on an output of a surrounding environment detector (11) mounted to the host vehicle (100); and
an execution unit (22) configured to execute a second rider assistance operation when it is determined that group traveling in which a plurality of saddle-type vehicles (200) including the host vehicle (100) travels in a group while forming a plurality of vehicle lines (VL1 and VL2) is being performed, the second rider assistance operation being different from a first rider assistance operation which is executed when it is determined that the group traveling is not performed,
the execution unit (22) executing the second rider assistance operation based on partial surrounding environment information, the partial surrounding environment information being information included in the surrounding environment information and being information of a target range (O), the target range (O) being a part of a detection range (R) of the surrounding environment detector (11), and
the target range (O) being subject to change by the execution unit (22).

2. The controller according to claim 1, wherein the execution unit (22) determines whether the group traveling is being performed based on the partial surrounding environment information.

3. The controller according to claim 1, wherein the execution unit (22) sets a parameter for the second rider assistance operation based on the partial surrounding environment information.

4. The controller according to any one of claims 1 to 3, wherein the execution unit (22) changes the target range (O) based on traveling state information of the host vehicle (100).

5. The controller according to claim 4, wherein the traveling state information includes vehicle speed information which is information of a vehicle speed of the host vehicle (100).

6. The controller according to claim 4, wherein the traveling state information includes traveling attitude information which is information of a traveling attitude of the host vehicle (100).

7. The controller according to claim 4, wherein the traveling state information includes setting input information which is information of a setting input by a rider in a positional relationship adjustment operation in which a positional relationship between the host vehicle (100) and another vehicle (300) being a target that the host vehicle (100) follows is adjusted to a target positional relationship.

8. The controller according to claim 4, wherein the traveling state information includes vehicle line information which is information of a vehicle line (VL1) to which the host vehicle (100) belongs.

9. The controller according to any one of claims 1 to 3, wherein the execution unit (22) changes the target range (O) based on positional relationship information between the host vehicle (100) and another vehicle (300) passing on a side of the host vehicle (100).

10. The controller according to claim 9, wherein the positional relationship information includes relative speed information which is information of a relative speed between the host vehicle (100) and the other vehicle (300).

11. The controller according to claim 9, wherein the positional relationship information includes relative distance information which is information of a relative distance between the host vehicle (100) and the other vehicle (300).

12. The controller according to any one of claims 1 to 3, wherein the execution unit (22) changes the target range (O) based on road information.

13. The controller according to claim 12, wherein the road information includes lane width information which is information of a width (LW) of a lane (L1) on which the host vehicle (100) travels.

14. The controller according to claim 12, wherein the road information includes lane information which is information of a count of lanes (L) for traveling in a same direction as the host vehicle (100) and/or a usage of a lane (L1) on which the host vehicle (100) travels.

15. A control method for a rider assistance system (1), the control method comprising:
an acquisition step (S101) of acquiring, by an acquisition unit (21) of a controller (20), surrounding environment information of a host vehicle (100) based on an output of a surrounding environment detector (11) mounted to the host vehicle (100); and
an execution step (S102) of executing, by an execution unit (22) of the controller (20), a second rider assistance operation when it is determined that group traveling in which a plurality of saddle-type vehicles (200) including the host vehicle (100) travels in a group while forming a plurality of vehicle lines (VL1 and VL2) is being performed, the second rider assistance operation being different from a first rider assistance operation which is executed when it is determined that the group traveling is not performed,
in the execution step (S102), the execution unit (22) executing the second rider assistance operation based on partial surrounding environment information, the partial surrounding environment information being information included in the surrounding environment information and being information of a target range (O), the target range (O) being a part of a detection range (R) of the surrounding environment detector (11), and
the target range (O) being subject to change by the execution unit (22).
